# EUROPEAN PATENT SPECIFICATION

(11) **EP 1 625 049 B1**
(45) Date of publication and mention of the grant of the patent: **27.06.2007**
(21) Application number: 04710962.4
(22) Date of filing: 13.02.2004
(51) Int. Cl.: B60R 19/02, B65G 69/00

(54) **SHOCK ABSORBER, PARTICULARLY FOR COMMERCIAL VEHICLES OR THE LIKE**
STOSSDÄMPFER, BESONDERS FÜR NUTZFAHRZEUG
AMORTISSEUR, EN PARTICULIER POUR VEHICULES COMMERCIAUX OU AUTRES VEHICULES SEMBLABLES

(30) Priority: 09.05.2003 IT RM20030083 U
(43) Date of publication of application: 15.02.2006
(73) Proprietor: Bawer S.r.l., 70022 Altamura, Bari (IT)
(72) Inventor: LORUSSO, Pasquale, I-70022 Altamura (IT); LORUSSO, Giuseppe, I-70022 Altamura (IT)
(74) Representative: Sarpi, Maurizio
(86) International application number: PCT/IT2004/000058
(87) International publication number: WO 2004/098956

(56) References cited:
- EP-A- 0 888 986
- DE-A- 10 003 744
- FR-A- 2 767 508
- FR-A- 2 804 644

## Description

The present finding relates to an improved shock absorber to be used in particular in the bodies of trucks and/or transport motor vehicles, i.e. a device which absorbs the shocks as a truck or the like approaches a loading platform and is able to overcome all of the problems caused by the height difference between the vehicle and the loading platform upon loading/unloading.

As an alternative to the fixed rubber bumper installed to the horizontal rear body and/or to the end of chassis, trucks of the state of art are provided with shock absorbers consisting of cylinders rotating about a horizontal axis, as disclosed in Patent EP 0 648 644, or cylinder with a vertical axis, or rubber ball bodies housed in suitable recesses arranged in the bumper or the shock absorber of the vehicle in which such ball bodies are able to rotate.

However, all of the above-mentioned solutions do not fully satisfy the requirements of users as they are not able to absorb any unevenness of the contact surface. In known devices, if the wall against which the rear portion of the truck body rests is shifted upwards or downwards because of a load change, the distance between the resting wall and the truck could be reduced, thus providing axial stresses that could possibly damage the shock absorber.

Moreover, the functionality of such shock absorbers provided with rotating members is strictly bound to the necessity that such rotating members keep the capability of a free rotation in time, however such rotation is often hampered by the undesired accumulation of debris and/or dirt caused both by the loading/unloading and the road circulation (mud, dust, etc.).

The main object of the finding is then to overcome such problems by providing a shock absorber provided with protected dampening means which is able to fully absorb or at least to limit the harmful effects of shocks in the axial direction, such as for example those that might occur as the truck approaches a loading platform.

This has been accomplished according to the present finding by providing a shock absorber apt to absorb the shocks caused when a transport motor vehicle, a truck or the like approaches the vertical wall of a loading platform or apt to absorb changes of distance between the vehicle and the wall of the loading platform upon loading/unloading, provided with at least one support member or front shoe which is connected to a fixed member by mechanical connecting means of dampening material which allows said support member to shift perpendicularly with respect to said fixed member of the shock absorber by changing its distance with respect to the fixed member itself, characterized in that it includes, in combination, a box-like member with an essentially parallelepiped shape provided with a front cover and a rear base (6) , which comprises the fixed member, as well as with one or more dampening members, which comprise the mechanical connecting means, which are kept in their positions by a suitable spacer that is free of moving to a direction perpendicular to the rear base and the box-like fixed member, support member or front shoe made of an antifriction material or other material able to slide on the surfaces on which it rests being rigidly connected to said spacer.

According to the disclosed finding, such support member acts as a "sliding shoe" for side shifts between the shock absorber and the contact surface to which the former rests or is pressed, as well as for axial shifts to absorb changes of distance between the vehicle and the wall of the loading platform.

An embodiment of the finding is shown only by way of a not limiting example in the accompanying drawings in which:

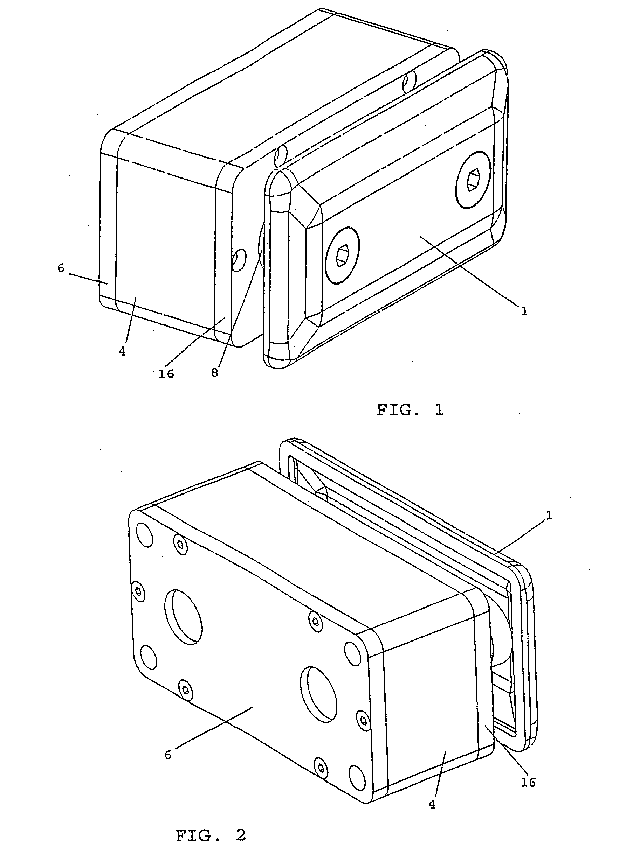

Figures 1 and 2 are perspective front and rear views of the finding, respectively; and

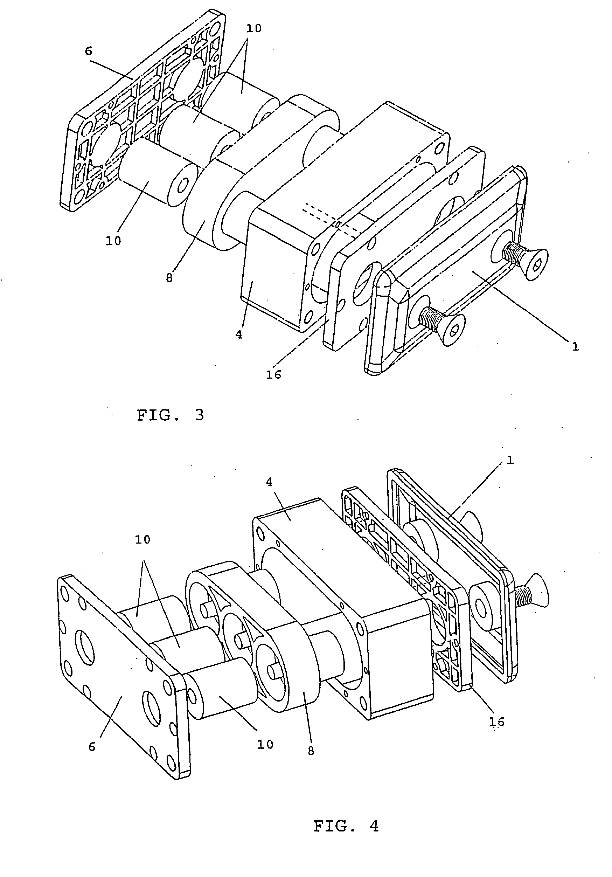

Figures 3 and 4 are exploded, front and rear views of the finding, respectively.

Referring particularly to the above Figures, the disclosed shock absorber includes, in combination, a preferably box-like fixed member 4 with an essentially parallelepiped shape provided with a front cover 16 and a rear base 6 as well as with one or more dampening members 10 which are kept in their positions by a suitable spacer 8 that is free of moving to a direction perpendicular to the rear base 6 and the box-like fixed member 4, the support member or front shoe 1 made preferably of an antifriction material or other material able to slide on the surfaces on which it rests being rigidly connected to such spacer 8.

According to the finding, such contact shoe 1 is able to shift perpendicular to its contact surface and to absorb resiliently any shock as the vehicle approaches the wall of the loading platform, as well as the little distance changes that can occur upon loading/unloading if the wall of the loading platform is not perfectly even and/or parallel to the loading body of the vehicle.

Moreover, the shoe has bevelled, rounded corners to ensure the greatest ease of sliding on the wall of the loading platform in case side shifts of the shoe occur upon loading/unloading.

At last, it should be appreciated that the shock absorber disclosed can be installed preferably at the rear end of the loading body of a vehicle, however, it can also be installed with the same effectiveness of operation and without any modification to the wall of the loading platform which the vehicles have to approach. Of course, in the latter case, the height at which the shock absorber is secured depends on the model of vehicle which will approach.

According to a peculiar characteristics of the finding, the dampening means consists of preferably tubular cylinders 10 of elastic material which are capable of being deformed by reducing their height by the compression exerted by shoe 1 connected thereto.

In the embodiment shown, shoe 1 is secured to the dampening means by a spacer 8. In other words, shoe 1 is firmly secured to one end of each elastic member 10, and the latter is connected with its opposite end to the fixed base 6 of the shock absorber. Thus, the elastic action of each dampening member 10 is performed by a temporary relative shift of shoe 1 that approaches the fixed base 6 and then leaves it up to the rest position.

It should be noted that, in order to guide shoe 1 inside the box-like body of the shock absorber, spacer 8 has an outer cylindrically shaped body matching the inner cylindrical shape of the box-like fixed body 4 so that the side shifts are limited.

## Claims

1. A shock absorber apt to absorb the shocks caused when a transport motor vehicle, a truck or the like approaches the vertical wall of a loading platform or apt to absorb changes of distance between the vehicle and the wall of the loading platform upon loading/unloading, provided with at least one support member or front shoe (1) which is connected to a fixed member (6) by mechanical connecting means (10) of dampening material which allows said support member to shift perpendicularly with respect to said fixed member (6) of the shock absorber by changing its distance with respect to the fixed member (6) itself, **characterized in that** it includes, in combination, a box-like member (4) with an essentially parallelepiped shape provided with a front cover (16) and a rear base (6) , which comprises the fixed member, as well as with one or more dampening members (10), which comprise the mechanical connecting means, which are kept in their positions by a suitable spacer (8) that is free of moving to a direction perpendicular to the rear base (6) and the box-like fixed member (4), support member or front shoe (1) made of an antifriction material or other material able to slide on the surfaces on which it rests being rigidly connected to said spacer (8).

2. The shock absorber according to the preceding claim, **characterized in that** said support member (1) acts as a "sliding shoe" for side shifts between the shock absorber and the contact surface to which the former rests or is pressed, as well as for axial shifts to absorb changes of distance between the vehicle and the wall of the loading platform.

3. The shock absorber according to the claim 1, **characterized in that** said contact shoe (1) is able to shift perpendicular to its contact surface, in both vertical and horizontal directins, and to absorb resiliently any shock as the vehicle approaches the wall of the loading platform, as well as the little distance changes that can occur upon loading/unloading when the wall of the loading platform is not perfectly even and/or parallel to the loading body of the vehicle.

4. The shock absorber according to claim 1, **characterized in that** said support member or shoe (1) has bevelled, rounded corners, thereby obtaining to ensure the greatest ease of sliding on the wall of the loading platform in case side shifts of the shoe occur upon loading/unloading.

5. The shock absorber according to any preceding claim, **characterized in that** said dampening means consists of tubular cylinders (10) of elastic material which are capable of being deformed by reducing their height by the compression exerted by shoe (1) connected thereto which moves with respect to the fixed member (6).

6. The shock absorber according to the preceding claim, **characterized in that** the support member or shoe (1) is firmly secured to one end of each said dampening member (10), and the latter is connected with its opposite end to the fixed base (6) of the shock absorber.

7. The shock absorber according to claim 1 or 3, **characterized in that**, in order to guide shoe (1) inside the box-like body (4) of the shock absorber, spacer (8) has an outer cylindrically shaped body matching the inner cylindrical shape of the box-like fixed body (4) so that the side shifts of shoe (1) are limited.

8. A vehicle with a loading body and a shock absorber according to any preceding claim, **characterized in that** said shock absorber is installed at the rear end of the loading body.

9. A loading bay or platform and a shock absorber according to any preceding claim, **characterized in that** said shock absorber is installed to the wall of the loading platform which the loading bodies of the vehicles have to approach, the height at which the shock absorber is applied depending in this case on the model of vehicle which will approach.

## Patentansprüche

1. Stoßdämpfer, der dazu ausgelegt ist, Stöße zu dämpfen, die auftreten, wenn sich ein Transportfahrzeug, ein Lkw oder ähnliches der vertikalen Wand einer Ladebühne nähert, oder der dazu ausgelegt ist, Änderungen des Abstands zwischen dem Fahrzeug und der Wand der Ladebühne beim Be-/Entladen zu absorbieren, ausgestattet mit wenigstens einem Stützteil (1) oder vorderen Schuh, der mit einem festen Teil (6) durch mechanische Verbindungsmittel (10) aus Dämpfungsmaterial verbunden ist, das es dem Stützteil gestattet, senkrecht in Bezug auf das feste Teil (6) des Stoßdämpfers zu verschieben, indem es seinen Abstand in Bezug auf das feste Teil (6) selbst ändert, **dadurch gekennzeichnet, dass** es, in Kombination, ein gehäuseartiges Teil (4) mit einer im Wesentlichen parallelepipeden Form enthält, versehen mit einer Vorderabdeckung (16) und einer hinteren Basis (6), die das feste Teil enthält, sowie mit einem oder mehreren Dämpfungsteilen (10), die die mechanischen Verbindungsmittel enthalten, die in ihrer Position durch einen geeigneten Abstandshalter (8) gehalten werden, der freibeweglich in eine Richtung senkrecht zur hinteren Basis (6) und dem gehäuseartigen festen Teil (4) ist, wobei das Stützteil oder vorderer Schuh (1) aus einem Gleitmaterial oder anderem Material hergestellt ist, das auf den Flächen gleiten kann, auf denen es, fest mit dem Abstandshalter (8) verbunden, ruht.

2. Stoßdämpfer nach dem vorhergehenden Anspruch, **dadurch gekennzeichnet, dass** das Stützteil (1) als "Gleitschuh" a-giert für seitliche Verschiebungen zwischen dem Stoßdämpfer und der Kontaktfläche, an die ersterer lehnt oder gedrückt wird, und auch für axiale Verschiebungen, um Abstandsänderungen zwischen dem Fahrzeug und der Wand der Ladebühne zu absorbieren.

3. Stoßdämpfer nach Anspruch 1, **dadurch gekennzeichnet, dass** der Kontaktschuh (1) dazu in der Lage ist, senkrecht zu seiner Kontaktfläche zu verschieben, sowohl in vertikale als auch horizontale Richtung, und federnd jeden Stoß zu absorbieren, wenn sich das Fahrzeug der Wand der Ladebühne nähert, sowie die kleinen Abstandsänderungen, die beim Be-/Entladen auftreten können, wenn die Wand der Ladebühne nicht vollständig eben und/oder parallel zum Ladekörper des Fahrzeugs ist.

4. Stoßdämpfer nach Anspruch 1, **dadurch gekennzeichnet, dass** das Stützteil oder der Schuh (1) abgefaste, abgerundete Ecken hat, wodurch gewährleistet wird, dass die größte Leichtigkeit beim Verschieben auf der Wand der Ladebühne für den Fall erlangt wird, dass Seitenverschiebungen des Schuhs beim Be-/Entladen auftreten.

5. Stoßdämpfer nach einem vorhergehenden Anspruch, **dadurch gekennzeichnet, dass** die Dämpfungsmittel aus rohrförmigen Zylindern (10) aus elastischem Material bestehen, die durch Verringern ihrer Höhe verformt werden können, und zwar durch die Komprimierung, die von dem damit verbundenen Schuh (1), der sich in Bezug auf das feste Teil (6) bewegt, ausgeübt wird.

6. Stoßdämpfer nach dem vorhergehenden Anspruch, **dadurch gekennzeichnet, dass** das Stützteil oder der Schuh (1) fest an einem Ende jedes Dämpfungsteils (10) gesichert ist, und letzteres mit seinem gegenüberliegenden Ende mit der festen Basis (6) des Stoßdämpfers verbunden ist.

7. Stoßdämpfer nach Anspruch 1 ader 3, **dadurch gekennzeichnet, dass** der Abstandshalter (8), um den Schuh (1) in dem gehäuseartigen Körper (4) des Stoßdämpfers zu führen, einen äußeren zylindrisch geformten Körper hat, angepasst an die innere zylindrische Form des gehäuseartigen festen Körpers (4), so dass die seitlichen Verschiebungen des Schuhs (1) eingeschränkt sind.

8. Fahrzeug mit einem Ladekörper und einem Stoßdämpfer nach einem vorhergehenden Anspruch, **dadurch gekennzeichnet, dass** der Stoßdämpfer am hintere Ende des Ladekörpers angeordnet ist.

9. Verladerampe oder Ladebühne und Stoßdämpfer gemäß einem vorhergehenden Anspruch, **dadurch gekennzeichnet, dass** der Stoßdämpfer an der Wand der Ladebühne, der sich die Ladekörper der Fahrzeuge nähern müssen, angeordnet ist, wobei die Höhe, bei der der Stoßdämpfer angewendet wird, in diesem Fall von der Art des Fahrzeugs, das sich nähert, abhängt.

## Revendications

1. Amortisseur approprié pour amortir les chocs provoqués lorsqu'un véhicule à moteur de transport, un camion ou similaire s'approche de la paroi verticale d'une plate-forme de chargement ou capable d'amortir des changements de distance entre le véhicule et la paroi de la plate-forme de chargement suite au chargement/déchargement, prévu avec au moins un élément de support ou patin avant (1) qui est raccordé à un élément fixe (6) par des moyens de raccordement mécaniques (10) en matériau amortissant qui permet audit élément de support de se déplacer perpendiculairement par rapport audit élément fixe (6) de l'amortisseur en changeant sa distance par rapport à l'élément fixe (6) lui-même, **caractérisé en ce qu'**il comprend, en combinaison, un élément en forme de boite (4) avec une forme essentiellement parallélipipédique doté d'un couvercle avant (16) et d'une base arrière (6) qui comprend l'élément fixe, ainsi qu'avec un ou plusieurs éléments d'amortissement (10), qui comprennent les moyens de raccordement mécaniques qui sont maintenus dans leurs positions par une entretoise appropriée (8) qui est libre de se déplacer dans une direction perpendiculaire à la base arrière (6) et à l'élément fixe en forme de boîte (4), l'élément de support ou patin avant (1) réalisé avec un matériau anti-frottement ou un autre matériau capable de coulisser sur les surfaces sur lesquelles il repose en étant raccordé de manière rigide à ladite entretoise (8).

2. Amortisseur selon la revendication précédente, **caractérisé en ce que** ledit élément de support (1) sert de « patin coulissant » pour les déplacements latéraux entre l'amortisseur et la surface de contact sur laquelle le premier repose ou est comprimé, ainsi que pour les déplacements axiaux pour amortir les changements de distance entre le véhicule et la paroi de la plate-forme de chargement.

3. Amortisseur selon la revendication 1, **caractérisé en ce que** ledit patin de contact (1) peut se déplacer perpendiculairement à sa surface de contact, à la fois dans les directions verticale et horizontale, et pour amortir de manière élastique n'importe quel choc lorsque le véhicule se rapproche de la paroi de la plate-forme de chargement, ainsi que de petits changements de distance qui peuvent se produire suite au chargement/déchargement lorsque la paroi de la plate-forme de chargement n'est pas parfaitement régulière et/ou parallèle au corps de chargement du véhicule.

4. Amortisseur selon la revendication 1, **caractérisé en ce que** l'élément de support ou patin (1) a des coins biseautés, arrondis, obtenant ainsi la façon de garantir la plus grande facilité pour coulisser sur la paroi de la plate-forme de chargement dans le cas dans lequel les déplacements latéraux du patin ont lieu suite au chargement/déchargement.

5. Amortisseur selon l'une quelconque des revendications précédentes, **caractérisé en ce que** lesdits moyens d'amortissement se composent de vérins tubulaires (10) en matériau élastique qui peuvent être déformés en réduisant leur hauteur par la compression exercée par le patin (1) raccordé à ceux-ci qui se déplace par rapport à l'élément fixe (6).

6. Amortisseur selon la revendication précédente, **caractérisé en ce que** l'élément de support ou patin (1) est fermement fixé sur une extrémité de chacun desdits éléments d'amortissement (10) et le dernier est raccordé avec son extrémité opposée à la base fixe (6) de l'amortisseur.

7. Amortisseur selon la revendication 1 ou 3, **caractérisé en ce qu'**afin de guider le patin (1) à l'intérieur du corps en forme de boîte (4) de l'amortisseur, l'entretoise (8) a un corps externe formé de manière cylindrique correspondant à la forme cylindrique interne du corps fixe en forme de boîte (4) de sorte que les décalages latéraux du patin (1) sont limités.

8. Véhicule avec un corps de chargement et un amortisseur selon l'une quelconque des revendications précédentes, **caractérisé en ce que** ledit amortisseur est installé au niveau de l'extrémité arrière du corps de chargement.

9. Quai de chargement ou plate-forme et amortisseur selon l'une quelconque des revendications précédentes, **caractérisé en ce que** ledit amortisseur est installé sur la paroi de la plate-forme de chargement que les corps de chargement des véhicules doivent approcher, la hauteur à laquelle l'amortisseur est appliqué dépendant dans ce cas du modèle du véhicule qui s'approche.
